**Europäisches Patentamt**

**European Patent Office**

**Office européen des brevets**

(19)

(11) Numéro de publication: **0 080 911
B1**

(12) ## FASCICULE DE BREVET EUROPEEN

(45) Date de publication du fascicule du brevet:
**14.08.85**

(51) Int. Cl.⁴: **F 02 B 37/12**

(21) Numéro de dépôt: **82401863.4**

(22) Date de dépôt: **11.10.82**

(54) **Dispositif de commande pneumatique de la pression de suralimentation d'un moteur turbocompressé.**

(30) Priorité: **26.11.81 FR 8122182**

(43) Date de publication de la demande:
**08.06.83 Bulletin 83/23**

(45) Mention de la délivrance du brevet:
**14.08.85 Bulletin 85/33**

(84) Etats contractants désignés:
**DE GB IT SE**

(56) Documents cités:
**EP - A - 0 079 255
FR - A - 1 318 443
FR - A - 2 306 339
FR - A - 2 392 230
US - A - 3 150 814
US - A - 3 233 403
US - A - 4 203 296**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Arnaud, Henri, 9, Lotissement Châteaux
Cerny, F-91590 La Ferte-Alais (FR)**

ACTORUM AG

## Description

La présente invention concerne la commande de la vanne de décharge des turbocompresseurs.

On sait que les moteurs thermiques alimentés par turbocompresseur comportent toujours une vanne de décharge bypassant le côté turbine du turbocompresseur, faute de quoi la pression d'alimentation au moteur risquerait d'augmenter indéfiniment jusqu'à une valeur dangereuse.

Pour commander ce clapet de décharge, il est connu d'utiliser un vérin pneumatique à membrane, avec ressort de rappel agissant dans le sens de la fermeture du clapet, et de faire agir sur ce vérin dans le sens de l'ouverture la pression prélevée à la sortie de la partie compresseur. Ce dispositif présente l'avantage de la simplicité et permet de régler par une décharge progressive la pression d'admission du moteur tout en empêchant que cette pression atteigne une valeur dangereuse.

Le document FR-A N° 2392230 décrit un dispositif de commande analogue comprenant un passage de gaz d'échappement en dérivation autour de la turbine, une soupape de commande du débit dans ce passage, des moyens de rappel de la soupape en position fermée, et des moyens poussant la soupape dans sa position d'ouverture en fonction de la pression d'admission en aval d'une soupape à volet.

On sait d'autre part que, pour les faibles charges du moteur, la pression et le débit des gaz d'échappement ne sont pas suffisants pour que le turbocompresseur fournisse un pression d'alimentation significative. Au contraire, à partir d'un certain seuil où le turbocompresseur commence à devenir efficace, la pression d'alimentation augmente d'une manière significative, ce qui augmente du même coup le taux de remplissage, donc la pression et le débit des gaz d'échappement, et par un effet de rétroaction la pression d'alimentation continue à augmenter. On passe ainsi d'une manière franche de la phase atmosphérique à la phase suralimentée, cette dernière entraînant à posteriori l'intervention du dispositif de régulation précédent. Cependant, malgré sa simplicité, le dispositif rappelé ci-dessus présente l'inconvénient qu'en phase atmosphérique le côté turbine du turbocompresseur constitue une perte de charge à l'échappement qui abaisse le rendement du moteur, et également un refroidissement des gaz d'échappement par augmentation des pertes calorifiques, ce qui présente un inconvénient lors de l'utilisation d'un réacteur catalytique antipollution. Il serait donc souhaitable de supprimer cette perte de charge et cette perte calorifique pendant la phase atmosphérique.

Le document US-A N° 4203296 permet en fait de remédier à cet inconvénient avec un dispositif de commande pneumatique de la pression d'alimentation d'un moteur turbocompressé dont la vanne de décharge reste ouverte pendant la phase atmosphérique.

Il est connu en outre qu'un moteur turbocompressé peut supporter en régime transitoire un taux de suralimentation nettement supérieur à celui admis en régime permanent. Cela s'explique en particulier par le fait que la température des parois au contact des gaz dans le moteur est à priori moins élevée en début d'accélération qu'en régime stabilisé équivalent, et également par une meilleure capacité de refroidissement de l'échangeur de chaleur. D'autres facteurs, tel l'enrichissement en accélération, contribuent à autoriser un relèvement momentané de la pression limite de suralimentation. Il serait donc souhaitable dans le dispositif simple rappelé ci-dessus de retarder l'instant auquel a lieu l'intervention de la vanne de décharge lors des périodes d'accélération.

Une solution possible est fournie par le dispositif de commande décrit dans le document EP-A N° 0079255, document considéré compris dans l'état de la technique en vertu de l'art. 54 (3), au nom de la titulaire, où une valve à retard est interposée dans la conduite de liaison raccordant au conduit d'admission du moteur la partie compresseur du turbocompresseur.

Par ailleurs, l'intervention de la vanne de décharge, pour des raisons de sécurité du moteur, ne devrait en fait faire intervenir que la pression en aval du papillon des gaz, c'est-à-dire la pression réelle d'alimentation, qui est généralement inférieure à la pression en amont pour toutes les positions du papillon des gaz autres que la pleine ouverture, ce qui revient encore à restreindre l'intervention de la vanne de décharge.

Le but de l'invention est d'éliminer tous les inconvénients précédents, c'est-à-dire de faire en sorte qu'en phase atmosphérique on élimine les pertes de charge et calorifiques, et qu'en phase suralimentée on produise un retard à l'ouverture de la vanne de décharge en même temps qu'une commande de sécurité instantanée en fonction de la pression réelle d'alimentation.

L'invention utilise une vanne de décharge à vérin pneumatique de commande de type habituel, mais qui, contrairement à l'habitude, est normalement ouverte, c'est-à-dire que le ressort de rappel du vérin est disposé dans le sens opposé au sens habituel. Ce vérin, par exemple du type à membrane, comporte donc deux chambres de commande, dont une chambre de fermeture telle qu'une augmentation de pression dans cette chambre entraîne la fermeture de la vanne, et une chambre d'ouverture située de l'autre côté. Contrairement à l'habitude, également le tarage de ce ressort ne détermine pas la pression de suralimentation, ce tarage étant par suite beaucoup plus faible qu'à l'ordinaire.

L'invention consiste à prélever, par une canalisation de prélèvement, une pression de référence dans la conduite d'alimentation en amont du venturi et en aval du compresseur et à la transmettre à un point commun d'où part une autre conduite alimentant la chambre de fermeture, tandis que la chambre d'ouverture est connectée à ce même point commun par l'intermédiaire d'un étrangleur introduisant une forte perte de charge et par une conduite de décharge à l'atmosphère par l'intermédiaire d'une vanne manométrique comportant essentiellement un clapet, susceptible de venir obturer cette conduite de mise à l'atmosphère et actionné dans le sens de l'ouverture par un ressort taré et dans le sens de la fermeture par l'action de la pression de référence ou de la pression d'admission, en aval du venturi.

De cette manière, en phase atmosphérique, la vanne de décharge est normalement ouverte sous l'effet du ressort de rappel. Lorsque la pression d'alimentation atteint une valeur significative, grâce à la faiblesse du ressort du vérin de commande cette pression, transmise à la chambre de fermeture, provoque la fermeture de la vanne de décharge puisque l'autre chambre du vérin est ouverte à l'atmosphère. Au contraire, lorsque cette pression dépasse le seuil de réglage, la vanne manométrique ferme la mise à l'atmosphère de la chambre d'ouverture, de sorte que la même pression s'établit progressivement dans les deux chambres du vérin qui ouvre alors la vanne sous l'effet du ressort de rappel.

Cette disposition permet d'insérer dans la conduite reliant le point commun à la vanne manométrique une forte perte de charge doublée d'un clapet antiretour de manière à retarder l'ouverture de la vanne de décharge en phase suralimentée. En outre, dans ladite canalisation de prélèvement on insère une électrovanne dont le circuit électrique est commandé par un contacteur actionné par la commande des gaz de manière à n'ouvrir le passage de cette conduite qu'à partir de la pleine ouverture des gaz, ou peu avant. Enfin, dans ce circuit électrique, on interpose un manocontact commandé dans le sens de l'ouverture par la pression régnant dans le conduit d'admission en aval du papillon des gaz lorsque cette pression dépasse un seuil dangereux.

Dans un mode de réalisation préféré de l'invention, on interpose également dans ladite canalisation de prélèvement, en amont de l'électrovanne, une capacité constituant une réserve de pression.

De cette manière, en phase atmosphérique, la vanne de décharge est normalement ouverte sous l'effet du ressort de rappel comme précédemment. Lorsque l'on veut faire intervenir la suralimentation, la pression régnant dans la réserve de pression est transmise à la chambre de fermeture, provoquant la fermeture de la vanne de décharge puisque l'autre chambre du vérin est ouverte à l'atmosphère. Lorsque la pression d'admission dépasse le seuil de réglage, la vanne manométrique ferme la mise à l'atmosphère de la chambre d'ouverture, de sorte que la même pression s'établit progressivement dans les deux chambres du vérin qui ouvre alors la vanne sous l'effet du ressort de rappel.

Le moteur peut ainsi fonctionner en phase atmosphérique jusqu'à l'ouverture complète du papillon des gaz, à partir de laquelle intervient la mise en service de la suralimentation.

Pour assurer le réglage de la puissance du moteur en phase suralimentée, dans le mode de réalisation préféré, la course de la commande des gaz est prolongée après que l'on a atteint la pleine ouverture du papillon, de façon à permettre à une commande appropriée d'augmenter progressivement la réaction du ressort de la vanne manométrique, depuis une valeur faible jusqu'à la valeur maximale admise en régime stabilisé; la contrepression à l'échappement est ainsi limitée à sa valeur maximale dans tout le domaine de fonctionnement.

Dans un autre mode de réalisation, le réglage de la puissance du moteur en phase suralimentée est réalisé par le papillon des gaz, après que l'on a atteint la pleine ouverture du papillon, par l'intervention d'un contacteur à deux positions stables, actionné par le circuit de commande de l'électrovanne de façon à établir la communication entre la réserve de pression et les deux chambres du vérin pneumatique lorsque le papillon des gaz est à pleine ouverture et ne l'interrompre ensuite que pour une position correspondant à une charge moyenne, à déterminer pour disposer d'une progressivité suffisante. Dans ce cas, la vanne manométrique tend à régler la pression de référence à une valeur constante.

D'autres particularités et avantages de l'invention ressortiront des dessins annexés donnés uniquement à titre d'exemple et sur lesquels:

la fig. 1 est une vue schématique d'un mode préféré de réalisation du dispositif suivant l'invention;

la fig. 2 est une vue d'un deuxième mode de réalisation;

la fig. 3 est une vue d'un troisième mode de réalisation.

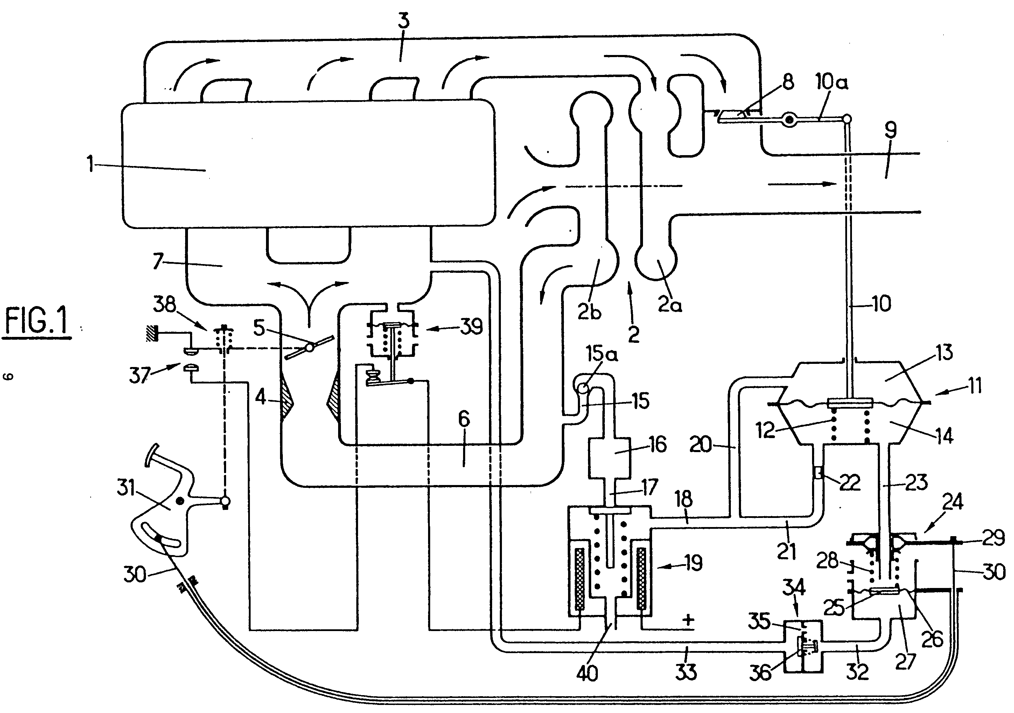

On voit sur la fig. 1 le moteur 1 équipé d'un turbocompresseur 2 dont la partie turbine 2a est alimentée par le conduit d'échappement 3 du moteur et dont la partie compresseur 2b aspire l'air atmosphérique et alimente le dispositif habituel à venturi 4 et à papillon des gaz 5 par une tubulure 6. Le papillon des gaz règle ainsi le débit d'air admis dans la tubulure d'admission 7.

D'une manière connue, l'ensemble comporte une vanne de décharge 8 permettant à une fraction plus ou moins grande des gaz d'échappement 3 de passer directement dans le conduit d'échappement 9 sans traverser la turbine 2a. Cette vanne 8 comporte un clapet solidaire d'un levier 10a relié à une tige 10 actionnée par un vérin pneumatique 11, généralement du type à membrane.

Ce vérin comporte un ressort de rappel 12 mais, contrairement à la disposition habituelle, ce ressort agit dans le sens de l'ouverture de la vanne 8, et son tarage est relativement faible, sans commune mesure avec la pression de suralimentation. Sa chambre divise le corps en une chambre de fermeture 13, dont la mise en pression provoque la fermeture de la vanne 8 à l'encontre du ressort 12, et une chambre d'ouverture 14 produisant l'effet inverse.

La pression régnant dans le conduit de refoulement 6 en amont du venturi 4 est prélevée en 15 et transmise à travers un clapet antiretour 15a à une réserve de pression 16 qui alimente par un conduit 17 et par l'intermédiaire d'une électrovanne 19 un conduit commun 18 duquel part une conduite 20 raccordée à la chambre de fermeture 12. En même temps, une autre conduite 21 alimente la chambre d'ouverture 14, mais par l'intermédiaire d'un étrangleur 22 constituant une perte de charge importante. Cette même chambre d'ouverture 14 communique avec l'atmosphère par l'intermédiaire d'une conduite 23 terminée par une vanne manométrique 24, constituée essentiellement par un clapet 25 actionné par une membrane 26 et venant obturer la mise à l'atmosphère de la conduite 23 lorsque la pression régnant sous la membrane 26, dans la chambre de commande 27, est suffisante pour vaincre un ressort de rappel 28 agissant dans le sens de l'ouverture. Le tarage de ce ressort est réglé par l'intermédiaire du levier 29 actionné à l'aide d'un câble 30 par la commande des gaz 31 pour que son point d'équilibre corresponde à la pression de suralimentation voulue en régime permanent.

En effet, cette chambre de commande 27 est réunie au conduit d'admission 7 par des conduites 32 et 33 et par l'intermédiaire d'une valve à retard 34. Cette dernière est constituée essentiellement par un étrangleur 35 disposé en parallèle avec un clapet antiretour 36 de manière que l'ensemble oppose une perte de charge importante seulement dans le sens de 33 vers 32.

L'électrovanne 19, commandée de préférence dans le sens de l'ouverture, est alimentée par un contact électrique 37 lié à la commande de gaz 31 par un dispositif compensateur élastique 38 qui ferme le circuit électrique lorsque le papillon des gaz 5 atteint la pleine ouverture et qui actionne ensuite le câble 30 de tarage de la vanne manométrique 24. En outre, sur le circuit électrique allant du contact 37 à l'électrovanne 19 est disposé un dispositif de sécurité 39 constitué par un manocontact raccordé au conduit d'admission 7 en aval du papillon des gaz 5 et ouvrant le circuit électrique lorsque la pression dans ce conduit d'admission atteint une valeur dangereuse.

Tant que le papillon des gaz 5 n'est pas à pleine ouverture, le contact 37 est ouvert, les deux chambres 13 et 14 du vérin 11 sont soumises à la pression atmosphérique par l'électrovanne 19 qui obture la conduite 17 et fait communiquer la conduite 18 avec l'atmosphère par 40. Sous l'action du ressort 12, le clapet 8 de la vanne de décharge est donc ouvert au maximum, ce qui fait que la contrepression à l'échappement du moteur 1 est aussi réduite que possible afin d'éviter toute perte de rendement. Si l'ensemble est doté d'un réacteur catalytique antipollution, l'amorçage de celui-ci est relativement rapide grâce au fait que les gaz d'échappement ne sont pas refroidis par la traversée de l'étage turbine 2a du turbocompresseur 2.

Au contraire, lorsque la pédale d'accélérateur 31 est suffisamment enfoncée pour que le papillon des gaz 5 soit en position de pleine ouverture, le contact 37 se ferme et alimente l'électrovanne 19, laquelle obture la sortie à l'atmosphère 40 et fait communiquer les conduits 17 et 18. La pression de suralimentation régnant dans la réserve 16 est alors transmise aux deux branches 20 et 21. Si l'on est en régime permanent de fonctionnement du moteur, il faut alors distinguer deux régimes de fonctionnement du dispositif de régulation de la pression de suralimentation:

Si la pression de suralimentation régnant en 7 est inférieure à la limite spécifiée et correspondant au tarage du ressort 28 de la vanne manométrique 24, celle-ci maintient la chambre 14 ouverte à l'atmosphère, la perte de charge produite par l'étrangleur 22 étant beaucoup plus importante que la perte de charge subie dans la conduite 23 et la vanne manométrique. Grâce à la faiblesse du tarage du ressort 12, le vérin 11 produit alors la fermeture de la vanne de décharge 8, ce qui produit la mise en service du turbocompresseur 2.

Lorsque, à la suite de cette mise en service, on dépasse le seuil de la phase atmosphérique pour passer en phase suralimentée, dès que la pression de suralimentation dépasse la valeur déterminée par le tarage du ressort 28 qui dépend du degré d'enfoncement de la pédale d'accélérateur au-delà de la position correspondant à la pleine ouverture du papillon des gaz, la vanne manométrique 24 coupe la communication à l'atmosphère du conduit 23, et par suite la pression dans la chambre d'ouverture 14 s'établit progressivement à travers l'étrangleur 22 à la même valeur que la pression régnant dans la chambre de fermeture 13, de sorte que la vanne de décharge 8 s'ouvre sous l'effet du ressort 12.

En régime permanent, la vanne de décharge 8 tend donc à prendre une position d'équilibre dépendant du degré d'enfoncement de la pédale d'accélérateur.

Au contraire, au cours d'une phase d'accélération importante, la valve à retard 35 ne transmet la pression en 27 qu'avec un certain retard, ce qui permet d'améliorer la réponse dynamique de l'ensemble en retardant l'ouverture de la vanne de décharge 8 et en faisant fonctionner d'une manière transitoire le moteur 1 à un régime de suralimentation au-delà de la limite de réglage. Il ne faut tout de même pas qu'au cours de cette période la pression réelle dans le conduit d'admission 7 dépasse une valeur dangereuse, ce qui est contrôlé par le dispositif de sécurité 39 qui éventuellement entre en service pour couper l'alimentation de l'électrovanne 19 et ainsi ouvrir la valve de décharge 8.

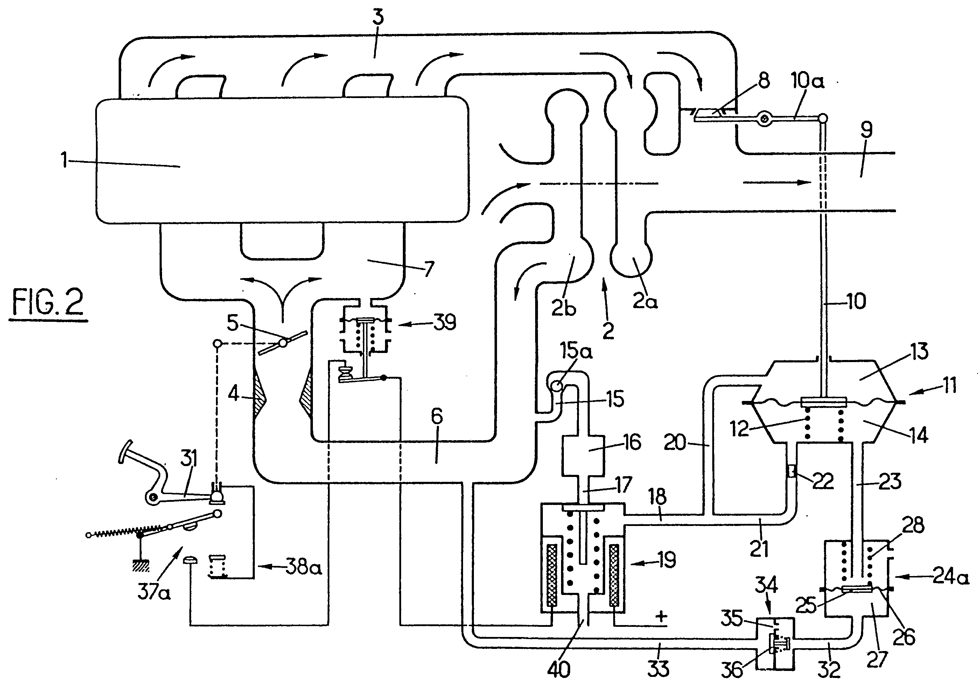

On obtient ainsi toutes les fonctions désirées avec un ensemble relativement simple, automatique et de peu d'entretien. La variante représentée sur la fig. 2 est analogue à celle de la fig. 1 et elle s'en distingue par le remplacement de la vanne à tarage variable 24 par une vanne 24a à tarage constant et par le remplacement du contacteur simple 37 de la fig. 1, dont les points d'ouverture et de fermeture coïncident avec la pleine ouverture du papillon des gaz, par un contacteur 37a à deux positions stables et dont la fermeture intervient lorsque le papillon des gaz est à pleine ouverture, mais dont l'ouverture est retardée jusqu'au retour du papillon dans une position intermédiaire. Dans cet exemple, la course de la pédale d'accélérateur est limitée à une position correspondant à la pleine ouverture du papillon des gaz.

De plus, dans cette variante de la fig. 2, il est préférable de raccorder le conduit 33 non plus au conduit 7 mais au conduit 6 de manière à prendre comme pression de référence pour commander la vanne manométrique 24a la pression régnant dans le conduit de refoulement 6, en amont du papillon des gaz.

Par ailleurs, le ressort 28 de la vanne 24a est taré avec précision pour que son point d'équilibre corresponde à la pression de suralimentation voulue en régime permanent sans être modifié par la commande des gaz.

Le contact électrique 37a à deux positions stables est lié à la commande de gaz 31 par un dispositif compensateur élastique 38a qui ferme le circuit électrique lorsque le papillon des gaz atteint la pleine ouverture et qui ne l'ouvre ensuite qu'aux environs de la moitié de la course de la commande de gaz. Le dispositif de sécurité 39 est identique au précédent.

Lorsque la pédale d'accélérateur 31 est suffisamment enfoncée pour que le papillon des gaz 5 soit en position de pleine ouverture, le contact 37a se ferme et alimente l'électrovanne 19, laquelle obture la sortie à l'atmosphère 40 et fait communiquer les conduits 17 et 18. La pression de suralimentation régnant dans la réserve 16 est alors transmise aux deux branches 20 et 21. Si l'on est en régime permanent de fonctionnement du moteur, on a les deux mêmes régimes de fonctionnement du dispositif que précédemment, à ceci près que l'ouverture du papillon des gaz peut n'être que partielle, tandis qu'en phase accélération on a le même fonctionnement et le même retard.

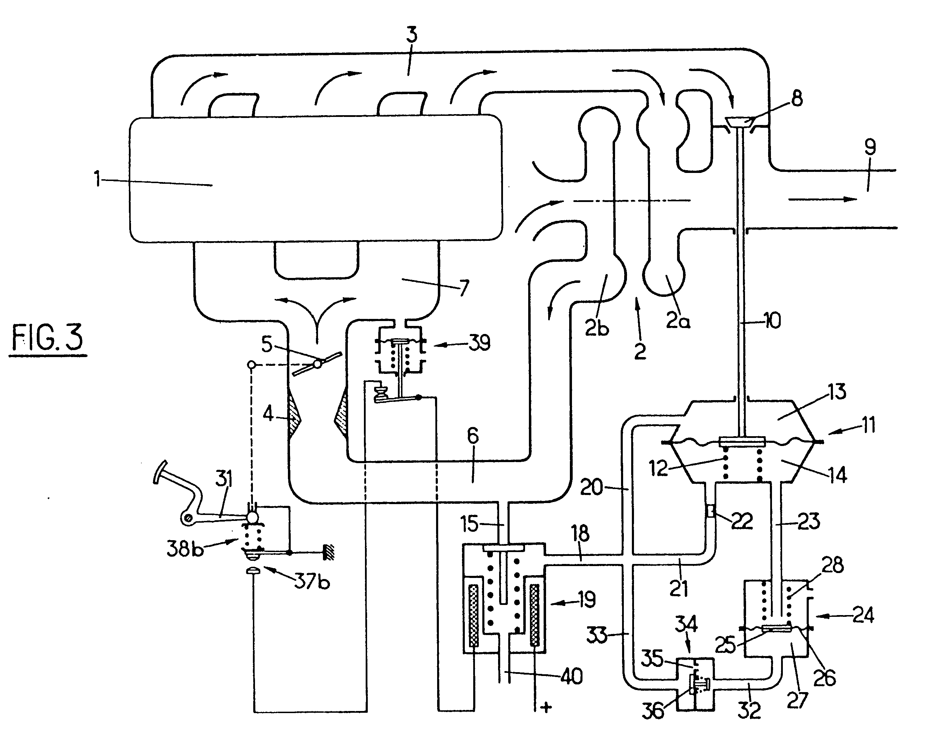

Le mode de réalisation de la fig. 3 se distingue de celui de la fig. 2, d'une part par l'absence de la réserve 16 et du clapet antiretour 15a, ce qui revient à dire que c'est la conduite de prélèvement 15 qui joue le rôle de l'entrée 17 de l'électrovanne 19, bien qu'il serait possible également de prévoir ces deux organes 16 et 15a dans ce cas, et d'autre part par le raccordement direct de 33 à la conduite commune 18 en aval de la valve 19.

En outre, le contacteur 37b et son compensateur élastique 38b sont d'un type plus simple que les précédents et provoquent la mise en service de la suralimentation par fermeture du circuit avant la pleine ouverture du papillon 5.

A ces différences près, le fonctionnement est analogue à celui de l'exemple qui précède.

# Revendications

1. Dispositif de commande pneumatique de la pression de suralimentation d'un moteur turbocompressé, du type comportant un turbocompresseur (2) dont la partie turbine (2a) est alimentée par l'échappement (3) du moteur (1), avec une vanne de décharge (8) en dérivation, et dont la partie compresseur (2b) alimente par un conduit de refoulement (6) et un papillon des gaz (5) la conduite d'admission (7) du moteur (1), et dans lequel ladite vanne de décharge (8) est commandée par un vérin pneumatique (11) à ressort de rappel (12), caractérisé par le fait que ledit ressort (12) du vérin pneumatique (11) agit dans le sens de l'ouverture de la vanne de décharge (8), qu'une conduite de prélèvement (15) prélève la pression dans le conduit (6) en amont du papillon des gaz et en aval du compresseur (2b) et la transmet à deux conduits en parallèle, dont un premier (20) aboutissant à la chambre de fermeture (13) du vérin pneumatique (11) et un deuxième conduit (21) aboutissant par l'intermédiaire d'un étrangleur (22) à la chambre d'ouverture (14) de ce vérin, laquelle est en communication par une conduite (23) et par l'intermédiaire d'une vanne manométrique (24) avec l'atmosphère, tandis qu'un troisième conduit (33-32) alimente la chambre de commande (27) de ladite vanne manométrique (24), laquelle comporte un ressort (28) taré pour que la mise à l'atmosphère de la conduite (23) soit interrompue lorsque la pression dans la chambre de commande (27) dépasse la valeur désirée pour la pression de suralimentation.

2. Dispositif selon la revendication 1, caractérisé par le fait que sur ledit troisième conduit (33-32) est insérée une valve à retard (34) comportant un étrangleur (35) à forte perte de charge placé en parallèle avec un clapet antiretour (36) de manière à opposer une forte réduction du débit, seulement dans le sens allant vers ladite chambre de commande (27).

3. Dispositif selon l'une des revendications précédentes, caractérisé par le fait que sur ledit conduit de prélèvement (15) réunissant ledit conduit de refoulement (6) auxdits premier (20) et deuxième (21) conduits est interposée une électrovanne (19), qui dans sa position de repos produit la mise à l'atmosphère desdits premier et deuxième conduits et dans sa position excitée établit la communication entre ledit conduit de refoulement (6) et lesdits conduits (20-21), le circuit électrique de commande de ladite électrovalve (19) étant alimenté à partir d'un contacteur (37; 37a; 37b) actionné par la pédale (31) de commande des gaz par l'intermédiaire d'un compensateur élastique (38; 38a; 38b).

4. Dispositif selon la revendication 3, caractérisé par le fait que sur la conduite d'admission (7) en aval du papillon des gaz (5) est interposé un manocontact de sécurité (39) dont le contact fonctionnant à l'ouverture est interposé dans le circuit électrique d'alimentation de l'électrovanne (19).

5. Dispositif selon l'une des revendications 3 ou 4, caractérisé par le fait que ledit troisième conduit (33) est raccordé sur le conduit d'admission (7), que la tarage du ressort (28) de la vanne manostatique (24) est modifié à distance au moyen d'une transmission appropriée (30) par la commande des gaz (31), que ledit contacteur (37) est actionné à partir de la pleine ouverture des gaz et que la commande des gaz (31) comporte un supplément de course, au-delà de la position de pleine ouverture, au cours de laquelle intervient ladite commande à distance (30) (fig. 1).

6. Dispositif selon l'une des revendications 3 ou 4, caractérisé par le fait que ledit troisième conduit (33) est raccordé directement sur le conduit de refoulement (6) et que le contacteur (37a) ainsi que le compensateur élastique associé (38a) sont agencés pour produire deux positions stables de manière que le contact se ferme pour la pleine ouverture des gaz, mais ne s'ouvre ensuite qu'après une fermeture partielle des gaz (fig. 2).

7. Dispositif selon l'une des revendications 3 ou 4, caractérisé par le fait que ledit troisième conduit (33) est raccordé comme les deux premiers conduits (20 et 21) à la sortie (18) de l'électrovalve (19) et que le contacteur (37b) ainsi que le compensateur associé (38b) sont agencés pour fermer le circuit dans toutes les positions de la commande des gaz (31) proches de la pleine ouverture.

8. Dispositif selon l'une des revendications 5 à 7, caractérisé par le fait qu'entre le conduit de prélèvement (15) et l'entrée (17) de l'électrovalve (19) sont interposés un clapet antiretour (15a) et une capacité (16) constituant réserve de pression.

## Patentansprüche

1. Pneumatische Steuervorrichtung für den Ladedruck einer Verbrennungskraftmaschine mit Turbolader, der Art, die einen Turbolader (2) aufweist, dessen Turbinenteil (2a) vom Auslass (3) der Verbrennungskraftmaschine (1) gespeist wird, mit einem parallelgeschalteten Abblasventil (8) und dessen Kompressorteil (2b) über eine Druckleitung (6) und eine Drosselklappe (5) die Einlassleitung (7) der Verbrennungskraftmaschine (1) speist, wobei das Abblasventil (8) von einem pneumatischen Druckzylinder (11) mit Rückholfeder (12) gesteuert wird, dadurch gekennzeichnet, dass diese Rückholfeder (12) des pneumatischen Druckzylinders (11) in Richtung der Öffnung des Abblasventils (8) wirkt, dass eine Stichleitung (15) den in der Leitung (6) stromaufwärts der Drosselklappe (6) und stromabwärts des Kompressors (2b) herrschenden Druck abnimmt und zwei parallelen Leitungen zuführt, von denen eine erste (20) in der Schliesskammer (13) des pneumatischen Druckzylinders mündet und von denen die zweite Leitung (21) über eine Engstelle (22) in der Öffnungskammer (14) dieses Druckzylinders mündet, die über eine Leitung (23) und über ein Manometerventil (24) mit der Atmosphäre in Verbindung steht, während eine dritte Leitung (33-32) die Steuerkammer (27) des Manometerventils (24) speist, das eine derart eingestellte Feder (28) aufweist, dass die Verbindung der Leitung (23) mit der Atmosphäre unterbrochen wird, wenn der Druck in der Steuerkammer (27) den für den Aufladedruck erwünschten Wert übersteigt.

2. Vorrichtung nach Anspruch 1, dadurch gekennzeichnet, dass in die dritte Leitung (33-32) ein Verzögerungsventil (34) eingesetzt ist, das eine Engstelle (35) für starken Druckabfall aufweist, die parallel zu einem Rückschlagventil (36) derart angeordnet ist, dass einer grossen Durchsatzverringerung entgegengewirkt wird, nur in Zufuhrrichtung zur Steuerkammer (27).

3. Vorrichtung nach einem der vorhergehenden Ansprüche, dadurch gekennzeichnet, dass in der Stichleitung (15), die die Druckleitung (6) mit der ersten Leitung (20) und der zweiten Leitung (21) verbindet, ein Elektroventil (19) eingesetzt ist, das in seiner Ruhestellung die Verbindung mit der Atmosphäre der ersten und der zweiten Leitung besorgt und in seiner erregten Stellung für die Verbindung zwischen der Druckleitung (6) und den Leitungen (20-21) sorgt, wobei die elektrische Steuerschaltung des Elektroventils (19) von einem Schalter (37, 37a, 37b) gesteuert wird, der vom Gaspedal (31) mittels eines elastischen Kompensators (38, 38a, 38b) betätigt wird.

4. Vorrichtung nach Anspruch 3, dadurch gekennzeichnet, dass in der Einlassleitung (7) stromabwärts der Drosselklappe (5) ein Sicherheitsdruckschalter (39) eingesetzt ist, dessen die Öffnung bewirkender Kontakt in dem elektrischen Steuerkreis für das Elektroventil (19) eingeschaltet ist.

5. Vorrichtung nach einem der Ansprüche 3 oder 4, dadurch gekennzeichnet, dass die dritte Leitung (33) mit der Einlassleitung (7) verbunden ist, dass die Einstellung der Feder (28) des Druckventils (24) mittels einer geeigneten Anordnung (30) ferngesteuert wird durch die Gassteuerung (31) und dass der Schalter (37) ab vollständiger Gasöffnung betätigt wird und dass die Gassteuerung (31) einen zusätzlichen Weg aufweist jenseits der vollständigen Gas-Offenstellung, bei dessen Durchlaufen die Fernsteuerung (30) (Fig. 1) wirksam ist.

6. Vorrichtung nach einem der Ansprüche 3 oder 4, dadurch gekennzeichnet, dass die dritte Leitung (33) direkt mit der Druckleitung (6) verbunden ist und dass der Schalter (37a) sowie der zugehörige elastische Kompensator (38a) so ausgestaltet sind, dass zwei stabile Positionen entstehen, derart, dass sich der Schalter bei vollständiger Gasöffnung schliesst, sich anschliessend jedoch erst nach einer teilweisen Gasdrosselung öffnet (Fig. 2).

7. Vorrichtung nach einem der Ansprüche 3 oder 4, dadurch gekennzeichnet, dass die dritte Leitung (33) ebenso wie die beiden ersten Leitungen (20, 21) mit dem Ausgang (18) des Elektroventils (19) verbunden sind und dass der Schalter (37b) sowie der zugehörige Kompensator (38b) ausgelegt sind, dass der Kreis geschlossen ist in allen Stellungen der Gassteuerung (31) in der Nähe der vollständigen Offenstellung.

8. Vorrichtung nach einem der Ansprüche 5 bis 7, dadurch gekennzeichnet, dass zwischen der Stichleitung (15) und dem Eingang (17) des Elektroventils (19) ein Rückschlagventil (15a) und ein Vorratsraum (16) als Druckreserve angeordnet sind.

## Claims

1. An arrangement for pneumatic controlling the boost pressure of a turbocharged engine, of the type comprising a turbocharger (2) in which the turbine portion (2a) is fed by the exhaust (3) of the engine (1), with a by-pass discharge valve (8), and the compressor portion (2b) feeds the intake duct (7) of the engine (1) by way of a delivery conduit (6) and a throttle butterfly valve (5), and wherein said discharge valve (8) is controlled by a pneumatic jack (11) with a return spring (12), characterised in that said spring (12) of the pneumatic jack (11) acts in the direction of opening of the discharge valve (8), that a take-off conduit (15) takes off the pressure in the conduit (6) upstream of the throttle butterfly valve and downstream of the compressor (2b) and transmits it to two conduits in parallel relationship, a first conduit (20) communicating with the closure chamber (13) of the pneumatic jack (11) and a second conduit (21) communicating by way of a constriction (22) with the opening chamber (14) of said jack, which communicates with the atmosphere by a conduit (23) and by way of a manometric valve (24) while a third conduit (33-32) feeds the actuating chamber (27) of said valve (24) which comprises a calibrated spring (28) in order for the communication to atmosphere of the conduit (23) to be interrupted when the pressure in the actuating chamber (27) exceeds the desired value for the boost pressure.

2. An arrangement according to Claim 1, characterised in that a delay valve (34) is disposed on said third conduit (33-32), said delay valve (34) comprising a throttle means (35) having a substantial pressure drop, disposed in parallel with a non-return valve (36) so as to resist a substantial reduction in the flow rate only in the direction towards said actuating chamber (27).

3. An arrangement according to one of the preceding claims, characterised in that an electrically operated valve (19) is disposed on said take-off conduit (15) which connects said delivery conduit (6) to said first and second conduits (20 and 21 respectively), the electrically operated valve (19) in its rest position producing the communication to atmosphere of said first and second conduits and in its energised position establishing the communication between said delivery conduit (6) and said conduits (20-21), the electrical circuit for controlling said valve (19) being powered from a switch (37; 37a; 37b) actuated by the throttle control pedal (31) by way of a resilient compensating means (38; 38a; 38b).

4. An arrangement according to Claim 3, characterised in that disposed on the intake duct (7) downstream of the throttle butterfly valve (5) is a safety pressure switch (39) whose contact which operates in the opening mode is interposed in the electrical circuit for powering the valve (19).

5. An arrangement according to one of Claims 3 or 4, characterised in that said third conduit (33) is connected to the intake duct (7), that the calibration of the spring (28) of the manostat valve (24) is modified remotely by means of a suitable transmission arrangement (30) by the throttle control (31), that said switch (37) is actuated as from full opening of the throttle, and that the throttle control (31) has a further operating travel, beyond the position of full opening, in the course of which said remote control (30) takes place (Fig. 1).

6. An arrangement according to one of Claims 3 or 4, characterised in that said third conduit (33) is connected directly to the delivery conduit (6) and that the switch (37a) and the associated resilient compensating means (38a) are arranged to produce two stable positions so that the contact is closed for full opening of the throttle but then opens only after partial closure of the throttle (Fig. 2).

7. An arrangement according to one of Claims 3 or 4, characterised in that said third conduit (33) is connected, like the first two conduits (20 and 21), to the outlet (18) of the electrically operated valve (19) and that the switch (37b) and the associated compensating means (38b) are arranged to close the circuit in all the positions of the throttle control (31) which are close to full opening.

8. An arrangement according to one of Claims 5 to 7, characterised in that interposed between the take-off conduit (15) and the inlet (17) of the electrically operated valve (19) are a non-return valve (15a) and a chamber (16) constituting a pressure reserve.

FIG.1

FIG.2

FIG.3

0 080 911